# EUROPEAN PATENT SPECIFICATION

(11) **EP 0 383 378 B1**
(45) Date of publication and mention of the grant of the patent: **06.10.1993**
(21) Application number: 90200270.8
(22) Date of filing: 07.02.1990
(51) Int. Cl.: C03B 8/02, C03C 3/076

(54) **Glass-like monoliths constituted by silicon oxide and titanium oxide and process for preparing them**
Glasige Monolithen aus Silizium- und Titaniumoxyd und Verfahren zu ihrer Herstellung
Monolithes vitreux constitués d'oxyde de silicium et de titane et procédé pour les préparer

(30) Priority: 10.02.1989 IT 1940389
(43) Date of publication of application: 22.08.1990
(73) Proprietor: ENICHEM S.p.A., 20122 Milano (IT)
(72) Inventor: Cogliati, Guido, I-00191 Rome (IT); Bezzi, Giovanni, I-48012 Bagnacavallo- Ravenna (IT)
(74) Representative: Fusina, Gerolamo

(56) References cited:
- EP-A- 0 147 887
- JOURNAL OF NON-CRYSTALLINE SOLIDS, vol. 48, 1982, pages 129-152, North-Holland, Amsterdam, NL; C.J.R. GONZALEZ-OLIVER et al.: "Silica and silica-titania glasses prepared by the sol-gel process"
- IDEM

## Description

This invention relates to a process for preparing amorphous, highly transparent silicon-dioxide and titanium-dioxide based glassy monoliths, containing up to 60 mol% of titanium dioxide and having very interesting physico-chemical properties.

Glassy monoliths of the kind referred to above are known, but having less than 10 mol% titanium dioxide, which have low thermal expansion coefficients: glass monoliths having more than 10 mol% of titanium dioxide, however, are difficult to process due to the kind of structures acquired due to their preparation methods.

Mixtures of the kind referred to above, which contain less than 10 mol% of titanium dioxide are generally used as quartz substitutes in technical applications requiring high temperatures, whereas the mixtures having more than 10 mol% are preferred either as catalyst substrates or to form coating structures.

The Journal of Non-Crystalline Solids, 48, (1982), 129-152 discloses silica and silica-titania glass monolithic samples prepared by the sol-gel process from alkoxides as starting materials.

The main drawback of this method, which provides for the hydrolysis of mixtures of organo-metallic compounds and subsequent irreversible condensation of the relevant alkoxides, is that, on occasions, hydroxides may precipitate due to the different speed of the hydrolysis of the alkoxides.

Another suggested approach has been to partially prehydrolyze the silicon alkoxide so as to have the hydrolysis of the titanium alkoxide to take place via the hydroxyl which was already bound to the silicon alkoxide: by so doing, the precipitation of titanium hydroxide was prevented, as disclosed in US-A-4 278 632, and in Journal of Non-Crystallide Solids, 100, (1988), 288 and 308.

The partial hydrolysis approach with subsequent addition of titanium alkoxide requires, however, that the operative parameters be determined with utmost accuracy, especially the hydrolysis temperature and the values of the alkoxide/solvent ratio and the water/alkoxide ratio.

The titanium alkoxide in water can be stabilized, as an alternative, by an addition of ethylene glycol and citric acid at 120°C.

Colloidal silica is added, in calculated amounts, to the mixture thus obtained, so as to prepare a glass having the desired SiO₂/TiO₂ ratio, as disclosed by Journal of Non-Crystalline Solids, 82, (1986), 246.

Monoliths of SiO₂/TiO₂ can thus be obtained, but it is difficult to carbonize the organic groups of the gel and, moreover, during the high-temperature heat treatment, crystallization may occur. A modification disclosed in Journal of Non-Crystalline Solids, 100, (1988) 364, directly hydrolyzes the titanium alkoxide with a solution of acetic acid., a comparatively stable colloidal solution being thus obtained, in which colloidal silica can be incorporated.

All the prior art methods use titanium alkoxides, titanium isopropoxide being preferred.

The gel-derived monolith is usually dried at a low temperature and under atmospherical pressures.

Inasmuch as the hydrolysis of the titanium alkoxides is comparatively easy, such alkoxides are difficult to handle, so that undesirable precipitations and fragmentations may take place.

Furthermore, drying at a low temperature and under atmospherical pressures of large monolith structures is often conducive to breakages and cracks.

The invention, therefore, provides a process for preparing amorphous, highly transparent silicon-dioxide and titanium-dioxide based glassy monoliths, comprising the steps of:
(a) hydrolyzing a titanium halide;
(b) adding, to the aqueous solution thus obtained, a solution of a silicon alkoxide in an aliphatic alcohol to form a colloidal solution;
(c) gelling the thus obtained colloidal solution to form an alcogel;
(d) drying said alcogel to obtain either a xerogel or an aerogel, and
(e) sintering the thus obtained xerogel or aerogel.

The present method makes it possible to prepare glass-like monoliths of the kind referred to above, and containing up to 60 mol% of titanium dioxide, without melting silicon dioxide and titanium dioxide and without using any titanium alkoxides. The drying of the gel-derived, or alcogel-derived, monolith of silicon oxide/titanium oxide is furthermore carried out under hypercritical conditions relatively to the solvent contained in the gel, which makes it possible the drying times to be accelerated, and phenomena of breakage and of cracking of the same monoliths to be prevented.

The interest in such a method derives on one hand from the difficulties which one meets when he tries to obtain analogous materials by means of the traditional melting techniques; and, on the other hand, from the fact that the only preparation method which is presently being used in practice -- and which is based on the deposition of the vapour phase from a suitable chemical compound -- is expensive, slow, and is of only limited usefulness when larger-dimensions monoliths have to be produced.

Therefore, the object of the instant invention is a process for preparing glass-like monoliths constituted by silicon oxide and titanium oxide, which makes it possible aerogels to be obtained which are endowed with excellent and versatile physical-chemical and technological characteristics also at high titanium concentrations, which process is carried out by means of the following operating steps:
(a) hydrolysis of a titanium halide;
(b) addition of a silicon alkoxide to the so obtained aqueous solution;
(c) gelation of the so formed colloidal solution;
(d) drying of the consequent alcogel;
(e) sintering of the aerogel.

The resulting monoliths show high characteristics of transparency, as well as very good acoustical, mechanical and thermal characteristics, which render them suitable for use in applications for which the traditional glasses cannot be advantageously used, even if they contain titanium oxide in a molar percentage higher than 10%; this latter quantitative feature renders the relevant monoliths, among the wide range of all of the monoliths which can be prepared by means of the above said procedure, a further meaningful object of the instant invention.

Therefore, the monoliths in question have a titanium content which is equal to, or higher than 10 mol %, and can preferably range up to 60%; have a high transparency, a low coefficient of thermal expansion, and are furthermore amorphous, and retain their amorphous character up to the highest temperatures.

In greater detail, the present invention relates to a method for preparing glass-like monoliths through the following operating steps:
(a) hydrolysis with water of a titanium halide;
(b) addition of a silicon alkoxide having the general formula

   Si(OR)₄

   with R being preferably selected from the group consisting of the alkyl radicals with a number of carbon atoms of up to 10,
   to the so obtained aqueous solution;
(c) solidification or gelation of the so obtained colloidal solution (alcogel) in suitable containers at temperatures preferably lower than 60°C;
(d) drying of the alcogel under atmospheric pressure, and at a temperature lower than 100°C, or at values of temperature and pressure higher than the critical values of temperature and pressure of the solvent contained in the gel, in order to respectively yield a xerogel or an aerogel of the dried product;
(e) sintering of the aerogel. with the desired glass-like monolith being consequently obtained.

More particularly, according to the above-said process, the titanium halide used is titanium tetrachloride (TiCl₄). This latter is either completely or partially hydrolysed and the obtained solution is reacted with silicon alkoxide, preferably tetramethyl- or tetraethyl-orthosilicate.

The reaction is exothermic: a clear colloidal solution is obtained, which can be poured into a container having the desired shape and dimensions.

After a few hours at a temperature lower than 60°C, the solution solidifies as a gel (alcogel). This latter, possibly washed in a suitable solvent, is dried under atmospheric pressure and at a temperature lower than 100°C, or at values of temperature and pressure higher than the critical values of temperature and pressure of the solvent contained in the gel. Such a solvent can be also replaced by liquified carbon dioxide if one wishes to operate at a low temperature during the gel drying under hypercritical conditions (the critical pressure of CO₂ is of 43 bar).

The xerogel shows a volume shrinkage of 60-70% relatively to the alcogel, whilst the aerogel has a volume which is only slightly smaller than alcogel volume; the dried products can subsequently be sintered at temperatures of up to 1500°C in order to obtain a transparent glass-like material, having the desired characteristics within of the range of typical properties which characterize the monolith according to the instant invention.

According to some preferred forms of practical embodiment, the hydrolysis of titanium halide is immediately followed, before the addition of silicon alkoxide, by a partial elimination of halide anion in order to reduce the concentration of anions in the gel.

Furthermore, if one wants to place a limit to any possible volume shrinkage, the addition is recommended of some colloidal silica to the solution obtained after the addition of silicon alkoxide, before the gelation step.

These methodological particularities, as well as any other operating details will be clearer from the reading of the following explanatory examples, which in no case should be construed as being limitative of the instant invention.

### Example 1

3.29 ml of TiCl₄ (0.03 mol) is dropwise added to 20 ml of distilled water. A vigorous exothermal reaction takes place, with fumes of hydrogen chloride being developed. The clear solution obtained is diluted with distilled water up to the volume of 27 ml.

40 ml of tetramethyl orthosilicate (TMOS), equivalent to 0.23 mol, is diluted with 40 ml of anhydrous methyl alcohol: to this solution, the titanium chloride solution prepared as said is added with stirring: heat is developed, and the temperature of about 55°C is reached. One hour later, the clear and colourless solution obtained is poured in a cylindical container of teflon with a diameter of 60 mm and a height of 20 mm, and a layer of solution of about 10 mm of height is formed. The container is tigthly sealed and is placed in a thermostat kept at 50°C. After some hours, the gelation of the solution occurs: after 12 hours the perfectly clear and colourless gel comes off easily from the container walls. The disk of (Si,Ti)O₂ gel is then placed inside a cylindrical glass container of 80 mm of diameter, and of 50 mm of height, and said container is immediately filled with anhydrous methyl alcohol. Two hours later, the container is charged to an autoclave in order that the drying may be carried out under hypercritical conditions.

The autoclave is then pressurized with nitrogen from room pressure up to the pressure of 70 kg/cm² and is heated up to 300°C at the heating speed of 130°C/hour.

During the heating, the pressure inside the autoclave increases: once that the pressure of 160 kg/cm² is reached, the opening of the venting valve is commanded, in order to stably keep the inner autoclave pressure at that value, without exceeding it. After the pressure inside the autoclave being kept at 160 kg/cm² for one hour -- with the temperature being simultaneously kept at 300°C -- the vent valve is gradually opened, so as to cause the inner autoclave pressure to decrease at the speed of 30 kg/cm²/hour.

The vented gas is cooled: methyl alcohol is condensed and recovered. When the pressure inside the autoclave reaches the room pressure, the autoclave is washed with a weak stream of dry nitrogen for a few minutes; then, the heating of the autoclave is discontinued as well.

Once that room temperature is reached, the autoclave can be opened. The obtained aerogel disk is transparent and slightly opalescent, it does not show crackings, has a diameter of 39 mm, a height of 6.6 mm, and a density of 0.63 g/cm³.

The increase in aerogel density is carried out by oven heating up to 500°C (heating speed 3°C/minute) under an oxygen stream: after 10 hours, to the oven a slow stream of nitrogen is fed, which contains 1% by volume of carbon tetrachloride (CCl₄): two hours later oil is charged to the oven, and the temperature is increased up to 1200°C (heating speed 3°C/minute). Two hours later the oven is cooled down to room temperature. A glass disk is obtained, which is perfectly transparent and colourless, has a diameter of 26 mm, a height of 4.5 mm and a density of 2.2 g/cm³.

### Example 2

3.29 ml of TiCl₄ (0.03 mol) is dropwise added to 20 ml of distilled water. A vigorous exothermal reaction takes place, with white fumes of hydrogen chloride being developed. The clear solution obtained is diluted with distilled water up to the volume of 27 ml.

60.5 ml of tetraethyl orthosilicate (TEOS), equivalent to 0.27 mol, is diluted with 60.5 ml of absolute ethyl alcohol: to this solution, the titanium chloride solution prepared as said is added with stirring: heat is developed, and the temperature of about 55°C is reached. One hour later, the clear and colourless solution obtained is poured in a cylindical container of teflon with a diameter of 60 mm and a height of 20 mm, and a layer of solution of about 10 mm of height is formed. The container is tigthly sealed and is placed in a thermostat kept at 50°C. After some hours, the gelation of the solution occurs: after 12 hours the perfectly clear and colourless gel comes off easily form the container walls and can be transferred into a cylindrical glass container of 80 mm, of diameter, and 50 mm of height, and said container is immediately filled with absolute ethyl alcohol. Two hours later, the glass container containing the alcogel disk and the alcohol is charged to an autoclave. The hypercritical drying is carried out according to the same modalities as disclosed in Example 1.

The obtained aerogel disk is transparent and slightly opalescent, it does not show crackings, has a diameter of 42 mm, a height of 6.7 mm, and a density of 0.45 g/cm³.

The increase in aerogel density is carried out in the same way as disclosed in Example 1.

A glass disk is obtained, which is perfectly transparent and colourless, has a diameter of 26 mm, a height of 4.5 mm and a density of 2.3 g/cm³.

### Example 3

A disk of silica gel and titanium oxide, prepared as disclosed in Example 1 or in Example 2 is charged to an autoclave, which is filled with liquid carbon dioxide at the temperature of 18°C.

The liquid carbon dioxide diffuses into the interior of the gel disk, and replaces the alcohol-water solvent contained in it. When the replacement of alcohol-water solvent by carbon dioxide is complete, the temperature of the autoclave is gradually increased up to 40°C.

The pressure inside the autoclave consequently increases up to 105 bar.

One hour later, the pressure inside the autoclave is decreased down to room pressure, within a 4-hours time.

The resulting aerogel disk has the same characteristics as of the disk prepared as disclosed in Examples 1 and 2, and can be submitted to the same thermal treatment as already disclosed in those Examples.

A perfectly amorphous, transparent glass disk is obtained.

### Example 4

9.86 ml of TiCl₄ (0.09 mol) is dropwise added to 20 ml of distilled water. A vigorous exothermal reaction takes place, with white fumes of hydrogen chloride being developed. The clear solution obtained is diluted with distilled water up to the volume of 29 ml.

31.12 ml of tetramethyl orthosilicate (TMOS), equivalent to 0.21 mol, is diluted with 62 ml of anhydrous methyl alcohol: to this solution, the titanium chloride solution prepared as said is added with stirring. Heat is developed, and the temperature of about 55°C is reached. One hour later, the clear and colourless solution obtained is poured in a cylindical container of teflon with a diameter of 60 mm and a height of 20 mm, and a layer of solution of about 10 mm of height is formed.

The gelation and hypercritical drying of the obtained alcogel is carried out according to the same operating modalities as disclosed in Example 1.

The aerogel disk has a diameter of 37 mm, a height of 6.1 mm, and a density of about 0.67 g/cm³.

The increase in aerogel density is carried out in the same way as disclosed in Example 1. A glass disk is obtained, which is perfectly transparent and colourless.

### Example 5

82.4 ml of TiCl₄ (0.75 mol) is poured into water, up to an end volume of 250 ml. Such a solution is then mixed with a solution at 50% by volume of PRIMENE JMT in 1.1.1-trichloroethane at the temperature of 50°C for 15 minutes. The phases are then separated. This process is repeated a plurality of times, until a ratio of Cl/Ti = 1.1 is obtained. The resulting aqueous solution is then added to the solution of TMOS or of TEOS in methyl or ethyl alcohol, as already disclosed in examples from 1 to 3.

### Example 6

9.86 ml of TiCl₄ (0.09 mol) is dropwise added to 20 ml of distilled water. A vigorous exothermic reaction takes place, with white fumes of hydrogen chloride being developed. The resulting clear solution is diluted and is adjusted at the volume of 27 ml with distilled water (solution "A").

54 ml of 0.01 N hydrogen chloride is added to 47 ml of tetraethyl orthosilicate (TEOS) (0.2 mol) and the resulting mixture is kept with mechanical stirring until a clear solution is obtained (solution "B").

The "A" solution is dropwise added to the "B" solution, with this latter being kept with mechanical stirring: a clear, yellow-coloured solution is obtained. With the reaction mixture being still kept stirred, 12.6 g of colloidal SiO₂ (0.21 mol) AEROSIL AX200 is added.

A slightly opalescent solution is obtained from which, after being kept at 60°C for some hours, an alcogel is obtained, which can be dried as disclosed in Example 1.

## Claims

1. Process for preparing amorphous, highly transparent silicon-dioxide and titanium-dioxide based glassy monoliths, comprising the steps of:
(a) hydrolyzing a titanium halide;
(b) adding, to the aqueous solution thus obtained, a solution of a silicon alkoxide in an aliphatic alcohol to form a colloidal solution;
(c) gelling the thus obtained colloidal solution to form an alcogel;
(d) drying said alcogel to obtain either a xerogel or an aerogel, and
(e) sintering the thus obtained xerogel or aerogel.

2. Process according to Claim 1, wherein the silicon alkoxide of step (b) is an Si(OR)₄, the alkyl radical R of which is a C₁-C₁₀ alkyl.

3. Process according to Claim 1, wherein the gelling of step (c) is carried out in a container at a temperature below 60°C.

4. Process according to Claim 1, wherein the drying step (d) is carried out at a temperature below 60°C, a xerogel being thus obtained.

5. Process according to Claim 1, wherein the drying step (d) is carried out under supercritical temperature and/or pressure conditions for the solvent contained in the alcogel, an aerogel being thus obtained.

6. Process according to Claim 1, wherein a partial removal of the halide ion is carried out between step (a) and step (b).

7. Process according to Claim 1, wherein the colloidal solution exiting step (b) is supplemented with colloidal silica.

8. Process according to Claim 1, wherein the titanium halide of step (a) is TiCl₄.

9. Process according to Claim 2, wherein the silicon alkoxide is selected from Si(CH₃O)₄ and Si(C₂H₅O)₄.

10. Process according to Claim 1, wherein step (e) is carried out at a maximum temperature of 1500°C.

## Patentansprüche

1. Verfahren zur Herstellung von amorphen, hoch transparenten glasigen Monolithen auf Siliciumdioxid- und Titandioxidbasis, umfassend die Stufen:
(a) Hydrolysieren eines Titanhalogenids;
(b) Zusetzen einer Lösung eines Siliciumalkoxids in einem aliphatischen Alkohol zu der solcherart erhaltenen wäßrigen Lösung zur Ausbildung einer kolloidalen Lösung;
(c) Gelieren der solcherart erhaltenen kolloidalen Lösung zur Ausbildung eines Alcogels;
(d) Trocknen dieses Alcogels unter Ausbildung entweder eines Xerogels oder eines Aerogels, und
(e) Sintern des solcherart erhaltenen Xerogels oder Aerogels.

2. Verfahren nach Anspruch 1, worin das Siliciumalkoxid von Stufe (b) ein Si(OR)₄ ist, dessen Alkylrest R ein C₁-C₁₀-Alkyl ist.

3. Verfahren nach Anspruch 1, worin das Gelieren von Stufe (c) in einem Behälter bei einer Temperatur unter 60°C ausgeführt wird.

4. Verfahren nach Anspruch 1, worin die Trocknungsstufe (d) bei einer Temperatur unter 60°C vorgenommen und solcherart ein Xerogel erhalten wird.

5. Verfahren nach Anspruch 1, worin die Trocknungsstufe (d) unter überkritischen Temperatur- und/oder Druckbedingungen für das im Alcogel enthaltene Lösungsmittel ausgeführt und solcherart ein Aerogel erhalten wird.

6. Verfahren nach Anspruch 1, worin zwischen Stufe (a) und Stufe (b) eine partielle Entfernung des Halogenidions vorgenommen wird.

7. Verfahren nach Anspruch 1, worin die aus Stufe (b) austretende kolloidale Lösung durch kolloidale Kieselsäure ergänzt wird.

8. Verfahren nach Anspruch 1, worin das Titanhalogenid von Stufe (a) TiCl₄ ist.

9. Verfahren nach Anspruch 2, worin das Siliciumalkoxid unter Si(CH₃O)₄ und Si(C₂H₅O)₄ ausgewählt wird.

10. Verfahren nach Anspruch 1, worin die Stufe (e) bei einer Höchsttemperatur von 1500°C ausgeführt wird.

## Revendications

1. Procédé de préparation de monolithes vitreux, amorphes, très transparents, à base de dioxyde de silicium et de dioxyde de titane, comprenant les étapes suivantes :
(a) hydrolyse d'un halogénure de titane,
(b) addition à la solution aqueuse ainsi obtenue, d'une solution d'un alcoolate de silicium dans un alcool aliphatique, pour former une solution colloïdale,
(c) gélification de la solution colloïdale ainsi obtenue pour former un alcogel,
(d) séchage dudit alcogel pour obtenir un xérogel ou un aérogel, et
(e) frittage du xérogel ou aérogel ainsi obtenu.

2. Procédé selon la revendication 1, dans lequel l'alcoolate de silicium de l'étape (b) répond à la formule Si(OR)₄ dans laquelle R représente un groupe alkyle ayant 1 à 10 atomes de carbone.

3. Procédé selon la revendication 1, dans lequel la gélification de l'étape (c) est réalisée dans un récipient, à une température inférieure à 60°C.

4. Procédé selon la revendication 1, dans lequel l'étape de séchage (d) est réalisée à une température inférieure à 60°C, un xérogel étant ainsi obtenu.

5. Procédé selon la revendication 1, dans lequel l'étape de séchage (d) est réalisée dans des conditions de température et/ou de pression supercritiques pour le solvant contenu dans l'alcogel, un aérogel étant ainsi obtenu.

6. Procédé selon la revendication 1, dans lequel une élimination partielle des ions halogénures est réalisée entre l'étape (a) et l'étape (b).

7. Procédé selon la revendication 1, dans lequel la solution colloïdale quittant l'étape (b) est complétée avec de la silice colloïdale.

8. Procédé selon la revendication 1, dans lequel l'halogénure de titane de l'étape (a) est TiCl₄.

9. Procédé selon la revendication 2, dans lequel l'alcoolate de silicium est choisi parmi Si(CH₃O)₄ et Si(C₂H₅O)₄.

10. Procédé selon la revendication 1, dans lequel l'étape (e) est réalisée à une température maximale de 1500°C.
